# EUROPEAN PATENT SPECIFICATION

(11) **EP 2 212 263 B1**
(45) Date of publication and mention of the grant of the patent: **27.05.2015**
(21) Application number: 08799999.1
(22) Date of filing: 15.09.2008
(51) Int. Cl.: C05D 9/02, C05D 9/00, C22B 3/04, C05F 11/00, C22B 47/00, C05B 17/02, C05B 19/00, C05F 7/00, C05G 3/00, C05G 3/02, C22B 7/00

(54) **A MICRONUTRIENT FERTILISER AND METHOD FOR PRODUCING SAME**
MIKRONÄHRSTOFFDÜNGER UND VERFAHREN ZU SEINER HERSTELLUNG
ENGRAIS À MICRONUTRIMENTS ET SON PROCÉDÉ DE FABRICATION

(30) Priority: 26.09.2007 AU 2007905255
(43) Date of publication of application: 04.08.2010
(73) Proprietor: Hitec Energy Limited, West Perth, W.A. 6005 (AU)
(72) Inventor: SHARMA, Yatendra, Hilarys W.A. 6025 (AU)
(74) Representative: Sanderson, Nigel Paul
(86) International application number: PCT/AU2008/001362
(87) International publication number: WO 2009/039560

(56) References cited:
- WO-A1-2004/033738
- WO-A1-2005/012582
- US-A- 3 892 553
- US-A- 4 464 193
- US-A- 4 525 197
- US-A1- 2005 065 034
- US-A1- 2007 119 222
- US-B1- 6 254 655
- DATABASE WPI Week 198025 Thomson Scientific, London, GB; AN 1980-44264C XP002645709, -& JP 55 062873 A (SANYO KOKUSAKU PULP CO) 12 May 1980 (1980-05-12)
- DATABASE WPI Week 198218 Thomson Scientific, London, GB; AN 1982-36105E XP002645710, & JP 57 051189 A (TOYO ENG CORP) 25 March 1982 (1982-03-25)
- DATABASE WPI Week 199826 Thomson Scientific, London, GB; AN 1998-295880 XP002645711, -& RU 2 095 453 C1 (SOYUZTSVETMETAVTOMATIKA STOCK CO) 10 November 1997 (1997-11-10)

## Description

### Field of the Invention

The present invention relates to a micronutrient fertiliser and a method for producing same. More particularly, the micronutrient fertiliser comprises and is prepared from, at least in part, manganese leach tailings resulting from a sulphur dioxide leach process.

### Background Art

In most mineral processing processes, as a consequence of the removal or recovery of the target metal(s) from the feed stream, a waste stream is generated as a result. Generally, that waste stream is either recycled back to the feed stream or it is treated to recover additional elements which may have commercial value before it is stockpiled or otherwise disposed of. The stockpiling or disposal of a waste, such as tailings, can represent a significant impost on a mineral processing operation. As such, any useful purpose to which such a tailing may be put is likely to represent a significant bonus to any such operation.

One example of the above is the Applicant's process for the sulphur dioxide leaching of manganese oxide, as described in International Patent Application PCT/AU03/01295 (WO 04/033738). The process of leaching a low to medium grade manganese dioxide ore in sulphur dioxide, followed by several purification steps for the extraction of manganese with manganese sulphate as a feed to electrowinning plant to electro-deposit electrolytic manganese dioxide or electrolytic manganese metal, produces a tailing. This leach tailing contains substantial quantities of micronutrients, including manganese, iron, calcium, sulphur and potassium in water insoluble form. This leach tailing, like many such leach tailings, is currently unutilised and requires costly impoundment.

The specific composition of such a leach tailing depends upon the type and composition of the manganese ore subjected to the sulphur dioxide leach. Typically, the leach tailing obtained from the sulphur dioxide leaching of manganese oxide ore from Ant Hill, Western Australia, as described in International Patent Application PCT/AU03/01295 (WO 04/033738), consists of about 5-10% manganese, about 15-20% iron, about 5-10% calcium, about 5-10% sulphur and about 1% potassium wt/wt.

The process described in International Patent Application PCT/AU03/01295 (WO 04/033738) uses surplus manganese ore in an equilibrium ratio with available iron to keep all iron leached through the process in ferric state. The surplus manganese oxide not leached by sulphur dioxide is reduced to other lower valance states in the presence of excess strong reducing agent, sulphur dioxide, and sulphuric acid. As a result, manganese is available in an insoluble but bioleachable form. In addition, the leach tailing also contains other compounds, such as oxides and/ or hydroxides or sulphates of iron, calcium, potassium and the like, which are derived from jarositing and goethiting steps in the purification of the pregnant leach solution (containing manganese sulphate).

Presently, the compounds of manganese, iron, calcium, sulphur and the like currently used in the agricultural industry are provided as water soluble salts. As such, these compounds tend to leach through soil very quickly after application, are consequently quickly ineffective and are expensive, requiring regular reapplication. However, the micronutrient elements derived from leach tailings are present in insoluble but bioleachable forms, and are consequently retained in the soil for a longer time.

The micronutrient fertiliser and method of the present invention have as one object thereof to overcome substantially the abovementioned problems of the prior art, or to at least provide a useful alternative thereto.

Throughout the specification, unless the context requires otherwise, the word "comprise" or variations such as "comprises" or "comprising", will be understood to imply the inclusion of a stated integer or group of integers but not the exclusion of any other integer or group of integers. Similarly, the word "preferably" or variations such as "preferred", will be understood to imply that a stated integer or group of integers is desirable but not essential to the working of the invention.

All percentages recited herein are by weight of the total composition unless otherwise specified.

### Disclosure of the Invention

According to a first aspect of the present invention there is provided a micronutrient fertiliser comprising leach tailings from a sulphur dioxide leach process for the recovery of manganese or manganese sulphate products, the leach tailings comprising micronutrients in water insoluble form, wherein the micronutrient fertiliser further comprises a dispersing agent to maintain the micronutrients in the form of finely divided solids.

Preferably the micronutrient fertiliser further comprises a biocide.

Preferably the micronutrients present in the leach tailing include any one or more of manganese, iron, calcium, potassium and sulphur and preferably wherein the original micronutrient content of the leach tailing includes about ≤ 10% manganese, ≤ 20% iron, ≤ 10% calcium and up to about 1% potassium, wt/wt and/or wherein the micronutrient content of the fertiliser is about 5-15% manganese, 10-15% iron, 5-8% sulphur and 1% potassium, wt/wt.

Preferably the manganese leach tailing is dehydrated to reduce its water content, and preferably wherein the dehydrated leach tailing has a water content of less than about 10% by weight.

Preferably the micronutrient fertiliser is provided in the form of an aqueous suspension, or wherein the micronutrient fertiliser is provided in granulated form.

Preferably the micronutrient fertilizer is provided in granulated form and the granulation step comprises initial drying of the manganese leach tailings, mixing same with sodium lignosulphate and a surfactant, extrusion and subsequent drying of the resulting granules.

According to a second aspect of the present invention, there is provided a method for the production of a micronutrient fertiliser, the method comprising the step of saturating an aqueous phase with a tailing from a sulphur dioxide leach process directed to the recovery of manganese or a manganese sulphate product, the leach tailings comprising micronutrients in water insoluble form, wherein a dispersing agent is added to the aqueous phase to maintain the micronutrients in the form of finely divided solids.

Preferably a biocide is added to the fertiliser.

Preferably the fertiliser is prepared in granulated form and preferably wherein the granulation step comprises initial drying of the manganese leach tailings, mixing same with sodium lignosulphate and a surfactant, extrusion and subsequent drying of the resulting granules.

Preferably the micronutrients present in the leach tailing include any one or more of manganese, calcium, potassium, iron and sulphur, and preferably wherein the original micronutrient content of the leach tailing includes about ≤ 10% manganese, ≤ 20% iron, ≤ 10% calcium and up to about 1% potassium, wt/wt and/or wherein the micronutrient content of the fertiliser is about 5-15% manganese, 10-15% iron, 5-8% sulphur and 1% potassium, wt/wt.

Preferably the manganese leach tailing is first dehydrated to reduce its water content, and preferably wherein the dehydrated leach tailing has a water content of less than about 10% by weight.

Preferably the micronutrient fertiliser is prepared in granular form, the method comprising:
a) agitating spray dried leach tailings from a sulphur dioxide leach process for the recovery of manganese or manganese sulphate, the leach tailings comprising micronutrients in water insoluble form and having an average particle size of less than 75 micron;
b) contacting the agitated feedstock particles with an aqueous granulating agent to agglomerate the leach tailing particles; and
c) recovering a granular leach tailing composition having an average particle size of at least 250 micron.

Preferably the micronutrient fertiliser is prepared in the form of a suspension concentrate.

Preferably the method of producing a suspension concentrate is conducted as a batch process.

Preferably the method of producing a suspension concentrate is conducted in a batch process comprising the following steps:
a) loading dehydrated manganese leach tailings to a mill;
b) grinding the dehydrated leach tailings;
c) hydrating the ground leach tailings with agitation;
d) adding a dispersing agent to the hydrated leach tailing; and
e) allowing the hydrated leach tailing to settle.

### Best Mode(s) for Carrying Out the Invention

A micronutrient fertiliser and a method for the production of that micronutrient fertiliser are described, the method comprising the step of saturating an aqueous phase with a tailing from a leach process directed to the recovery of manganese or a manganese sulphate product. Such a leach process is described in the Applicant's own International Patent Application PCT/AU03/01295 (WO 04/033738), the entire content of which is incorporated herein by reference.

The micronutrients present in the leach tailing include any one or more of manganese, calcium, potassium, iron and sulphur. By way of example, one original micronutrient content of the leach tailing includes about ≤ 10% manganese, ≤ 10% iron, ≤ 10% calcium and up to about 1% potassium, wt/wt.

The resulting micronutrient content of the fertiliser is, on a % by wt basis, 5 - 15% manganese, 10 - 15% iron, 5 - 8% sulphur and about 1% potassium.

The manganese leach tailing is first dehydrated to reduce its water content to a level of less than about 10% by weight.

According to one embodiment of the present invention there is provided a method for preparing a micronutrient fertiliser in granular form, the method comprising:
a) agitating a spray dried leach tailing having an average particle size of less than 75 micron;
b) contacting the agitated feedstock particles with an aqueous granulating agent to agglomerate the leach tailing particles; and
c) recovering a granular leach tailing composition having an average particle size of at least 250 micron.

A spray dried powdered feedstock material is understood to be one having an average particle size of less than about 75 micron but there may be a proportion of particles having a particle size up to about 250 micron. The granules produced have an average particle size of about 2 mm ± 0.3 mm. Preferred products are those in which the proportion of oversized granules, for example granules having a particle size in excess of 2 mm, is reduced, as is the proportion of undersized granulates and/or unchanged feedstock particles. Accordingly, in a preferred embodiment the granular leach tailing composition is screened to remove oversized product (having a particle size in excess of 2 mm) and/or undersized product (having a particle size of less than 250 micron). Preferably, the oversized product thus obtained is crushed and screened, particles of desired size particle being added to the product and undersized particles either being recycled as feedstock.

The method of this invention may be carried out in any mixing apparatus suitable for the mixing of dry particulate materials and having been adapted so that a fluid granulating agent can be sprayed on or otherwise added to the agitated feedstock particles. Conventional granulation equipment can be used. The mixing apparatus may be selected for continuous or batch operation.

The present invention provides a method for the granulation of leach tailings compositions and produces granules in a desired particle size range, which granules show an unexpected improvement in the flow and are less dusty than the starting spay dried leach tailing.

The method of the present invention is now described in more detail by reference to the granulation of dehydrated or spray dried leach tailings as an example of such a method.

A spray dried leach tailing feedstock is agitated in a mixer and contacted at ambient temperature, with a spray of a fluid granulating agent (such as that used in Example 2 hereinafter), preferably liquid water and optionally also steam, in an amount up to about 25% by weight of the feedstock.

When the method is carried out as a batch process, agitation is continued until granulation is complete. The granular product is then discharged and optionally being screened to remove oversize/undersize particles as noted hereinabove.

When the method is carried out as a continuous process, the residence time within the mixing apparatus need be only long enough to bring about the desired degree of contact between the feedstock particles and the aqueous granulating agent and can therefore be very short, in the order of a few seconds. The granular product is then preferably discharged into a drier, preferably a fluid bed drier, in which water is driven off. When using a fluid bed drier a suitable air inlet temperature is at least 130°C, preferably 150°C, and suitable residence times in the drier are from about 10 to 30 minutes. It is thought that the higher temperature in a drier can contribute towards the strength of the final granular leach tailing composition, i.e. increasing the drier temperature hardens the granules.

By proper adjustment of the process variables, such as the rate and amount of granulating agent added, speed of rotation of the mixer, product residence time within the mixer and placement of spray to achieve maximum contact of the granulating agent with the feedstock particles to be granulated, a granular product containing a high proportion of granules of a desired particle size can be discharged from a mixer. Undersized and/or oversized particles can be removed, as by screening, if a narrow particle size distribution is desired for the granulated product.

The granulation step is suitably carried out at ambient temperature when granulating leach tailing compositions.

The granulated micronutrient fertiliser according to the method of this invention consist of free flowing granules, of which up to about 90% by weight pass through a 2 mm screen and less than about 0.5% by weight pass through a 0.1 mm screen. It is therefore a feature of this invention that the granulation process according to this invention, using for example leach tailing feedstock, yields a granulated micronutrient fertiliser that is more free flowing than spray-dried leach tailings.

Any oversize material in the granular product from the agitator may be crushed and then screened with suitably sized particles added to the product and undersized particles recycled to the mixer with fresh feedstock. Undersize material may be recycled directly with fresh feedstock.

The granulating agent is suitably added in an amount of up to about 25% by weight of the leach tailing feedstock, preferably an amount of 10 to 20%; more preferably 15 to 20%, by weight of the feedstock is used (see Example 2 hereinafter). Greater amounts may lead to the formation of excessively large granules and the build up of deposits on the mixer walls during granulation.

The micronutrient fertiliser of the present invention may also be provided in the form of a suspension concentrate. To prepare such a suspension concentrate spray dried leach tailings are typically added to water containing a dispersant, preferably with a surfactant wetting agent together with a conventional non-ionic dispersant (see Example 1 hereinafter). A dispersion is formed using high shear mixing. The dispersion is then milled by any one of several known means of wet milling so that the mean particle size of the dispersed solid is below 10 micron, and is more typically in the range of from about 3 to 10 micron. The resulting product is known as a millbase and may be modified with additives such as antifreeze, thickeners and anti-settling agents and/or biocides. For a suspension concentrate to be acceptable it should not show a high degree of thickening, settling or growth of aggregates over time. These physical properties can be assessed by visual observation.

A suspension concentrate preferably has good viscosity and storage stability. Storage stability is usually assessed as the degree of top settling or syneresis, sedimentation or "claying", which is the tendency to form a sticky layer on the bottom, and "bleeding", which is the tendency of the dispersion to separate without necessarily displaying even settling. The ability for the suspension concentrate to redisperse is also important. These properties may also be assessed visually.

Only certain dispersants are suitable for use in the method of the present invention, as described in Example 1 hereinafter. When used alone, some dispersants give a viscosity of slurry premix unsuitable for milling so it is preferable to combine the dispersant with another fast acting and well known dispersant, for example magnesium aluminium silicate.

Prior art techniques for granulation are known. A comprehensive review of processes for granulation may be found in Kirk-Othmer's Encyclopedia of Chemical Technology, Third Edition (21) pp 77-105.

Agglomeration techniques are often used in the preparation of various herbicidal, fungicidal and fertiliser compositions wherein the individual ingredients have variable particle sizes and are liable to settle rapidly on storage. Agglomeration is accomplished by the addition of water as an agglomerating agent, but the products have a tendency to cake on storage in their cartons/containers, so the use of additives such as anionic surfactants and anti-caking agents has been proposed.

The leach tailings obtained from the leach process as described in International Patent Application PCT/AU03/01295 (WO 04/033738) are spray dried. Microscopic examination of spray-dried leach tailings show particle shapes displayed as broken microspheres. The material has poor flow characteristics and dust may be released on emptying large amounts of material when applying to the soil.

The method of the present invention addresses substantially such inherent disadvantages of spray dried leach tailings and provides a granular product having improved rates of flow and substantially increased bulk density which all lead to easier handling and storage. In addition, granular products in accordance with the present invention are suitable for mixing with other macronutrient fertilisers (for example monoammonium phosphate (MAP) and diammonium phosphate (DAP)) and other compositions, for example in the manufacture of fertiliser blends.

The present invention provides a process for granulating spray dried powdered leach tailing materials by agitation and the addition of a granulating agent. The present invention also provides granular leach tailing compositions of high bulk density which are non-dusting and have an improved ability to flow compared with the feed materials.

While the present invention has been described with reference to agrochemical formulations, it will be apparent that the improvements in dispersibility and suspensibility will render the present invention useful in other applications. The present invention will now be further described with reference to the following non-limiting examples and figures.

The method and composition of the present invention will now be described with reference to the following two non-limiting examples:

### Example 1:

99 kg of leach tailing, typically consisting of 20% w/w water, is charged into a ball mill to reduce the particle size to P₇₅ 15 µm. Gradually 10 kg water is added into the ball mill to keep the slurry hydrated. Slurry is then transferred into a vessel and stirred thoroughly. 1 kg magnesium aluminium silicate is added as a dispersing agent to the slurry with thorough agitation. This is followed by the addition of 110 g of biocide from BASF Myacide AS with constant stirring. The slurry (suspension concentrate) is then packed into 20 kg x 5 HDPE containers.

After 24 hours the suspension concentrate was examined for the percent separation in suspension as indicated by the % volume of clear liquid on top of suspension.

The suspension concentrates then were stored at room temperature for a number of days and again evaluated. Results are presented in Table 1 below:

**Table 1**

| Time | 24 Hours | 7 days | 14 days | 30 days |
|---|---|---|---|---|
| Clear Liquid Top (%) | 0 | 3 | 5 | 7 |

The suspension concentrate immediately after formulation was also analysed for its micronutrient content, including Mn, Fe, Ca and S, using standard analytical procedures. It was found to contain 5.2 % Mn, 10.1% Fe, 10.5% Ca, 5.5% S and 1% K.

### Example 2:

100 kg of leach tailing, typically consisting of 20% w/w water, is dried to an appropriate limit of water content for extrusion of less than about 10% by weight, and then mixed with 10 kg Sodium Lignosulphate (an extrusion aid) and 2.4 kg Supragil MNS-425 (a surfactant). This mixture is then extruded using standard extruder. The extruded granules are dried so that maximum water content is 2%.

The granulated micronutrient fertiliser was analysed for its micronutrient content, including Mn, Fe, Ca and S, using standard analytical procedures. It was found to contain 8.0 % Mn, 12.0% Fe, 15% Ca, 7.0% S and 1% K.

### Example 3:

100 kg of leach tailing, typically consisting of 20% w/w water is dried to an appropriate limit of water content of less than 2% for compaction and granulation. The granulated material obtained is screened for the desired particle size of the granules, preferably 2 ± 0.3 mm. These granules are then coated with 1 g Biofix 220 per kg of granules. Biofix 220 acts as an anti-caking agent.

The granulated micronutrient fertiliser was analysed for its micronutrient content including Mn, Fe, Ca and S, using standard analytical procedures. It was found to contain 9.5% Mn, 13 % Fe, 16.5% Ca, 7.5% S and 1% K.

It is envisaged that the micronutrient fertiliser of the present invention will have particular application as an in-furrow micronutrient fertiliser. More particularly, the microfertiliser of the present invention is expected to increase plant growth, stimulate growth in plants, plant vigour and/or effect crop yield compared to use of the individual components alone.

It is further envisaged that the micronutrient fertiliser of the present invention may also have an antifungal effect. This may be a fungicidal or fungistatic effect. It is understood that the micronutrient fertiliser compositions of the present invention may have activity against parasitic fungi because of the presence of sulphur.

In order to apply the composition to the plant or environs of the plant, the composition may be used as a concentrate or may be formulated into a composition which includes an effective amount of the composition of the present invention together with a suitable inert diluent, carrier material and/or surface active agent. Preferably the composition is in the form of an aqueous solution which may be prepared from the suspension concentrate described hereinabove. The term "effective amount" is to be understood as an amount of the composition (and/or its individual components) to provide a fertilising and/or antifungal effect.

The rate and timing of application will depend on a number of factors known to those skilled in the art, such as the type of species and prevailing soil and weather conditions.

It is also envisaged possible to combine other micronutrient elements, such as but not limited to, copper, boron and molybdenum in the final composition of leach tailing. These may be added as soluble inorganic compounds (for example copper sulphate, zinc sulphate and sodium borate or sodium molybdate) or as chelates (for example copper EDTA) or other metal complexes or insoluble compounds (for example copper oxide and zinc oxide) with bioleachable properties.

The compositions of the present invention can be applied to the soil, plant, seed, or other area to be protected. Preferably the present invention is applied as in-furrow to the soil. The composition may be applied in any form such as dusting powders, wettable powders, granules, or suspension concentrates, preferably as granules or suspension concentrate.

Dusting powders may be formulated by mixing the leach tailing with one or more finely divided solid carriers and/or diluents, for example natural clays, kaolin, pyrophyllite, bentonite, alumina, montmorllonite, kieselguhr, chalk, daiatomaceous earths, calcium phospates, calcium and magnesium carbonates, sulfur, lime, flours, talc and other organic and inorganic solid carriers.

Granules are formed either by extrusion, compaction/granulation process or pan process. Other additives may also be included, such as emulsifying agents, wetting agents or dispersing agents.

These formulations, whether granular form or suspension concentrate, are often required to withstand storage for prolonged periods and after such storage, if required, to be capable of dilution with water to form aqueous preparations which remain homogeneous for a sufficient time to enable them to be applied by conventional spray equipment. The concentrates may contain 1-75% by weight of the active ingredients. When diluted to form aqueous preparations such preparations may contain varying amounts of the active ingredients depending upon the purpose for which they are to be used.

When the final composition is to be applied to the plants in case of foliar application, which because of their hairy or waxy surface, may be difficult to wet, it may also be advantageous to include other additives, commonly known in the agrochemical industry, such as surfactants, wetting agents, spreaders and stickers. Examples of appropriate wetting agents include silicone surfactants; nonionic surfactants, such as alkyl ethoxylates; anionic surfactants, such as phosphate ester salts; and amphoteric or cationic surfactants, such as fatty acid amido alkyl betaines.

As indicated above, the micronutrient fertilisers of the present invention are proposed to applied as in-furrow application, but may also be applied to the foliage of plants. The micronutrient fertilisers may be used advantageously on many types of agricultural and horticultural crops, including but not limited to, cereals, legumes, brassicas, cucurbits, root vegetables, sugar beet, grapes, citrus & other fruit trees and soft fruits. More particularly, crops that will benefit from the fertiliser include, but are not limited to, peas, oil seed rape, carrots, spring barley, avocado, citrus, mango, coffee, deciduous tree crops, grapes, strawberries and other berry crops, soybean, broad beans and other commercial beans, corn, tomato, cucurbitis and other cucumis species, lettuce, potato, sugar beets, peppers, sugar cane, hops, tobacco, pineapple, coconut palm and other commercial and ornamental palms, rubber and other ornamental plants.

The present invention comprises using leach tailings from the sulphur dioxide leach process which contains micronutrient elements such as manganese, iron, calcium, S and potassium in bioleachable form. The use of this combination will show a synergistic effect in the soils deficient in the above micronutrients. The sulphur present may also show fungicidal effect.

Micronutrient fertilisers derived from the leach tailings based on the present invention will provide a long term greater growth effective response than the soluble compounds of manganese, iron or calcium alone.

Suspension concentrates and granules of micronutrients derived from leach tailings contain micronutrient elements such as manganese, iron, calcium, sulphur and potassium are in insoluble bioleachable form. These will be slowly released to the soil by bacterial action, and as such will be retained by soil for much longer time as compared to the application of such micronutrients in soluble forms.

Presence of sulphur will also make the plants less prone to fungi such as powdery mildews. Thus, the present invention provides a means for applying a single product to plants which is an effective fungicide as well as an effective micronutrient fertiliser for long term effect.

As can be seen from the foregoing description, the present invention provides a method of producing a novel aqueous suspension or granular micronutrient fertilizer derived from manganese leach tailing, that tailing resulting from a sulphur dioxide leach process directed to the recovery of a manganese or manganese sulphate product. Further, the method is intended to recover the currently under utilised, and commercially valuable micronised metal elements from the manganese leach tailing to produce suspension or granular type fertiliser suitable for agricultural application.

Modifications and variations such as would be apparent to the skilled addressee are considered to fall within the scope of the present invention.

## Claims

1. A micronutrient fertiliser comprising leach tailings from a sulphur dioxide leach process for the recovery of manganese or manganese sulphate products, the leach tailings comprising micronutrients in water insoluble form, wherein the micronutrient fertiliser further comprises a dispersing agent to maintain the micronutrients in the form of finely divided solids.

2. A micronutrient fertiliser according to claim 1 wherein the micronutrient fertiliser further comprises a biocide.

3. A micronutrient fertiliser according to claim 1 or 2, wherein the micronutrients present in the leach tailing include any one or more of manganese, iron, calcium, potassium and sulphur.

4. A micronutrient fertiliser according to claim 3 wherein the original micronutrient content of the leach tailing includes about ≤ 10% manganese, ≤ 20% iron, ≤ 10% calcium and up to about 1% potassium, wt/wt.

5. A micronutrient fertiliser according to claim 3 wherein the micronutrient content of the fertiliser is about 5-15% manganese, 10-15% iron, 5-8% sulphur and 1% potassium, wt/wt.

6. A micronutrient fertiliser according to any one of the preceding claims, wherein the manganese leach tailing is dehydrated to reduce its water content.

7. A micronutrient fertiliser according to claim 6 wherein the dehydrated leach tailing has a water content of less than about 10% by weight.

8. A micronutrient fertiliser according to any one of the preceding claims, wherein the micronutrient fertiliser is provided in the form of an aqueous suspension, or wherein the micronutrient fertiliser is provided in granulated form.

9. A micronutrient fertiliser according to claim 8, wherein the micronutrient fertilizer is provided in granulated form and the granulation step comprises initial drying of the manganese leach tailings, mixing same with sodium lignosulphate and a surfactant, extrusion and subsequent drying of the resulting granules.

10. A method for the production of a micronutrient fertiliser, the method comprising the step of saturating an aqueous phase with a tailing from a sulphur dioxide leach process directed to the recovery of manganese or a manganese sulphate product, the leach tailings comprising micronutrients in water insoluble form, wherein a dispersing agent is added to the aqueous phase to maintain the micronutrients in the form of finely divided solids.

11. A method according to claim 10 wherein a biocide is added to the fertiliser.

12. A method according to claim 11, wherein the fertiliser is prepared in granulated form.

13. A method according to claim 12 wherein the granulation step comprises initial drying of the manganese leach tailings, mixing same with sodium lignosulphate and a surfactant, extrusion and subsequent drying of the resulting granules.

14. A method according to any of claims 10 to 13, wherein the micronutrients present in the leach tailing include any one or more of manganese, calcium, potassium, iron and sulphur.

15. A method according to claim 14 wherein the original micronutrient content of the leach tailing includes about ≤ 10% manganese, ≤ 20% iron, ≤ 10% calcium and up to about 1% potassium, wt/wt.

16. A method according to claim 14 wherein the micronutrient content of the fertiliser is about 5-15% manganese, 10-15% iron, , 5-8% sulphur and 1% potassium, wt/wt.

17. A method according to any one of claims 10 to 16, wherein the manganese leach tailing is first dehydrated to reduce its water content.

18. A method according to claim 17 wherein the dehydrated leach tailing has a water content of less than about 10% by weight.

19. A method according to claim 10 wherein the micronutrient fertiliser is prepared in granular form, the method comprising:
a) agitating spray dried leach tailings from a sulphur dioxide leach process for the recovery of manganese or manganese sulphate, the leach tailings comprising micronutrients in water insoluble form and having an average particle size of less than 75 micron;
b) contacting the agitated feedstock particles with an aqueous granulating agent to agglomerate the leach tailing particles; and
c) recovering a granular leach tailing composition having an average particle size of at least 250 micron.

20. A method according to claim 10, wherein the micronutrient fertiliser is prepared in the form of a suspension concentrate.

21. A method according to claim 20, wherein the method of producing a suspension concentrate is conducted as a batch process.

22. A method according to claim 21, wherein the method of producing a suspension concentrate is conducted in a batch process comprising the following steps:
a) loading dehydrated manganese leach tailings to a mill;
b) grinding the dehydrated leach tailings;
c) hydrating the ground leach tailings with agitation;
d) adding a dispersing agent to the hydrated leach tailing; and
e) allowing the hydrated leach tailing to settle.

## Patentansprüche

1. Spurennährstoffdünger, der Laugenreste aus einem Auslaugverfahren von Schwefeldioxid für die Rückgewinnung von Mangan- oder Mangansulfat-Produkten umfasst, wobei die Laugenreste Spurennährstoffe in wasserunlöslicher Form umfassen, wobei der Spurennährstoffdünger zusätzlich ein Dispergiermittel umfasst, um für die Spurennährstoffe die Form fein zerteilter Feststoffe zu bewahren.

2. Spurennährstoffdünger nach Anspruch 1, wobei der Spurennährstoffdünger zusätzlich ein Biozid umfasst.

3. Spurennährstoffdünger nach Anspruch 1 oder 2, wobei die im Laugenrest vorhandenen Spurennährstoffe einen oder mehrere der folgenden Stoffe enthalten: Mangan, Eisen, Calcium, Kalium und Schwefel.

4. Spurennährstoffdünger nach Anspruch 3, wobei der ursprüngliche Spurennährstoffinhalt des Laugenrests ungefähr ≤ 10 % Mangan, ≤ 20 % Eisen, ≤ 10 % Calcium und bis zu ungefähr 1 % Kalium, wt/wt, umfasst.

5. Spurennährstoffdünger nach Anspruch 3, wobei der Spurennährstoffinhalt des Düngers ungefähr 5-15 % Mangan, 10-15 % Eisen, 5-8 % Schwefel und 1 % Kalium, wt/wt, entspricht.

6. Spurennährstoffdünger nach einem beliebigen der vorhergehenden Ansprüche, wobei der Manganlaugenrest dehydriert wird, um den darin enthaltenen Wasseranteil zu reduzieren.

7. Spurennährstoffdünger nach Anspruch 6, wobei der dehydrierte Laugenrest einen ungefähren Wasseranteil von gewichtsmäßig weniger als 10 % aufweist.

8. Spurennährstoffdünger nach einem beliebigen der vorhergehenden Ansprüche, wobei der Spurennährstoffdünger in Form einer wässrigen Suspension bereitgestellt wird oder wobei der Spurennährstoffdünger als Granulat bereitgestellt wird.

9. Spurennährstoffdünger nach Anspruch 8, wobei der Spurennährstoffdünger als Granulat bereitgestellt wird und der Granulationsvorgang die Antrocknung der Manganlaugenreste, deren Vermischung mit Natriumligninsulfat und einem Tensid, die Extrusion und das anschließende Trocknen des entstandenen Granulats umfasst.

10. Verfahren zur Herstellung eines Spurennährstoffdüngers, wobei das Verfahren den Schritt der Sättigung einer wässrigen Phase mit dem Rest eines Auslaugverfahrens von Schwefeldioxid für die Rückgewinnung von Mangan oder eines Mangansulfat-Produkts umfasst, wobei die Laugenreste Spurennährstoffe in wasserunlöslicher Form umfassen, wobei ein Dispergiermittel zur wässrigen Phase hinzugefügt wird, um für die Spurennährstoffe die Form fein zerteilter Feststoffe zu bewahren.

11. Verfahren nach Anspruch 10, wobei dem Dünger ein Biozid hinzugefügt wird.

12. Verfahren nach Anspruch 11, wobei die Zubereitung des Düngers in Granulatform stattfindet.

13. Verfahren nach Anspruch 12, wobei der Granulationsvorgang die Antrocknung der Manganlaugenreste, deren Vermischung mit Natriumligninsulfat und einem Tensid, die Extrusion und das anschließende Trocknen des entstandenen Granulats umfasst.

14. Verfahren nach einem beliebigen der Ansprüche 10 bis 13, wobei die im Laugenrest vorhandenen Spurennährstoffe einen oder mehrere der folgenden Stoffe enthalten:
Mangan, Calcium, Kalium, Eisen und Schwefel.

15. Verfahren nach Anspruch 14, wobei der ursprüngliche Spurennährstoffinhalt des Laugenrests ungefähr ≤ 10 % Mangan, ≤ 20 % Eisen, ≤ 10 % Calcium und bis zu ungefähr 1 % Kalium, wt/wt, umfasst.

16. Verfahren nach Anspruch 14, wobei der Spurennährstoffinhalt des Düngers ungefähr 5-15 % Mangan, 10-15 % Eisen, 5-8 % Schwefel und 1 % Kalium, wt/wt, entspricht.

17. Verfahren nach einem beliebigen der Ansprüche 10 bis 16, wobei der Manganlaugenrest zunächst dehydriert wird, um den darin enthaltenen Wasseranteil zu reduzieren.

18. Verfahren nach Anspruch 17, wobei der dehydrierte Laugenrest einen ungefähren Wasseranteil von gewichtsmäßig weniger als 10 % aufweist.

19. Verfahren nach Anspruch 10, wobei die Zubereitung des Mikronährstoffdüngers in Granulatform stattfindet, wobei das Verfahren Folgendes umfasst:
a) das Vermischen sprühgetrockneter Laugenreste aus einem Auslaugverfahren von Schwefeldioxid für die Rückgewinnung von Mangan oder Mangansulfat, wobei die Laugenreste Spurennährstoffe in wasserunlöslicher Form umfassen und eine durchschnittliche Partikelgröße von weniger als 75 Mikrometer aufweisen;
b) das Kontaktieren der vermischten Partikel des Ausgangsmaterials mit einem wässrigen Granulationsmittel für die Anhäufung der Laugenrestpartikel; und
c) die Rückgewinnung einer granulatförmigen Laugenrestverbindung mit einer durchschnittlichen Partikelgröße von mindestens 250 Mikrometer.

20. Verfahren nach Anspruch 10, wobei die Zubereitung des Spurennährstoffdüngers in Form eines Suspensionskonzentrats stattfindet.

21. Verfahren nach Anspruch 20, wobei das Verfahren zur Herstellung eines Suspensionskonzentrats als diskontinuierlicher Prozess durchgeführt wird.

22. Verfahren nach Anspruch 21, wobei das Verfahren zur Herstellung eines Suspensionskonzentrats als diskontinuierlicher Prozess durchgeführt wird, welcher die folgenden Schritte umfasst:
a) das Verladen von dehydrierten Manganlaugenresten in eine Mühle;
b) das Mahlen der dehydrierten Laugenreste;
c) die Hydratisierung der gemahlenen Laugenreste durch Vermischen;
d) das Hinzufügen eines Dispergiermittels zum hydratisierten Laugenrest; und
e) das Ermöglichen der Ablagerung des hydratisierten Laugenrests.

## Revendications

1. Engrais de type micronutriment comprenant des résidus lixiviés provenant d'un processus de lixiviation de dioxyde de soufre permettant de récupérer du manganèse ou des produits à base de sulfate de manganèse, les résidus lixiviés comprenant des micronutriments sous forme non soluble dans l'eau, où l'engrais de type micronutriment comprend en outre un agent dispersif pour maintenir les micronutriments sous forme de solides finement divisés.

2. Engrais de type micronutriment selon la revendication 1, où l'engrais de type micronutriment comprend en outre un biocide.

3. Engrais de type micronutriment selon la revendication 1 ou 2, où les micronutriments présents dans le résidu lixivié contiennent l'un ou plusieurs du manganèse, du fer, du calcium, du potassium et du soufre.

4. Engrais de type micronutriment selon la revendication 3, où la teneur en micronutriment d'origine du résidu lixivié comprend environ ≤ 10 % de manganèse, < 20 % de fer, ≤ 10 % calcium et jusqu'à 1 % de potassium, en poids/poids.

5. Engrais de type micronutriment selon la revendication 3, où la teneur en micronutriment de l'engrais est d'environ 5-15 % de manganèse, 10-15 % de fer, 5-8 % de soufre et 1 % de potassium, en poids/poids.

6. Engrais de type micronutriment selon l'une quelconque des revendications précédentes, où le résidu lixivié de manganèse est déshydraté pour réduire sa teneur en eau.

7. Engrais de type micronutriment selon la revendication 6, où le résidu lixivié déshydraté a une teneur en eau inférieure à environ 10 % en poids.

8. Engrais de type micronutriment selon l'une quelconque des revendications précédentes, où l'engrais de type micronutriment est prévu sous forme de suspension aqueuse, ou bien où l'engrais de type micronutriment est prévu sous forme granulée.

9. Engrais de type micronutriment selon la revendication 8, où l'engrais de type micronutriment est prévu sous forme granulée et la phase de granulation comprend le séchage initial des résidus lixiviés de manganèse, le mélange de ces derniers avec du lignosulfate de sodium et un tensioactif, l'extrusion puis le séchage des granulés résultants.

10. Procédé de production d'un engrais de type micronutriment, le procédé comprenant la phase de saturation d'une phase aqueuse avec un résidu de processus de lixiviation de dioxyde de soufre dirigé en vue de la récupération de manganèse ou d'un produit à base de sulfate de manganèse, les résidus lixiviés comprenant des micronutriments sous forme non soluble dans l'eau, où l'on ajoute un agent dispersif à la phase aqueuse pour maintenir les micronutriments sous forme de solides finement divisés.

11. Procédé selon la revendication 10, dans lequel on ajoute un biocide à l'engrais.

12. Procédé selon la revendication 11, où l'on prépare l'engrais sous forme granulée.

13. Procédé selon la revendication 12, où la phase de granulation comprend le séchage initial des résidus lixiviés de manganèse, le mélange de ces derniers avec du lignosulfate de sodium et un tensioactif, l'extrusion puis le séchage des granulés résultants.

14. Procédé selon l'une quelconque des revendications 10 à 13, où les micronutriments présents dans le résidu lixivié contiennent l'un ou plusieurs du manganèse, du calcium, du potassium, du fer et du soufre.

15. Procédé selon la revendication 14, où la teneur en micronutriment d'origine du résidu lixivié comprend environ ≤ 10 % de manganèse, < 20 % de fer, ≤ 10 % calcium et jusqu'à 1 % de potassium, en poids/poids.

16. Procédé selon la revendication 14, où la teneur en micronutriment de l'engrais est d'environ 5-15 % de manganèse, 10-15 % de fer, 5-8 % de soufre et 1 % de potassium, en poids/poids.

17. Procédé selon l'une quelconque des revendications 10 à 16, où le résidu lixivié de manganèse est d'abord déshydraté pour réduire sa teneur en eau.

18. Procédé selon la revendication 17, où le résidu lixivié déshydraté a une teneur en eau inférieure à environ 10 % en poids.

19. Procédé selon la revendication 10, où l'engrais de type micronutriment est préparé sous forme granulée, le procédé comprenant :
a) l'agitation de résidus lixiviés lyophilisés provenant d'un processus de lixiviation de dioxyde de soufre permettant de récupérer du manganèse ou du sulfate de manganèse, les résidus lixiviés comprenant des micronutriments sous forme non soluble dans l'eau et présentant une taille particulaire moyenne inférieure à 75 microns ;
b) mise en contact des particules de matières premières agitées avec un agent de granulation aqueux pour agglomérer les particules de résidus lixiviés ; et
c) récupération d'une composition de résidus lixiviés granuleux ayant une taille particulaire moyenne d'au moins 250 microns.

20. Procédé selon la revendication 10, où l'engrais de type micronutriment est préparé sous forme de concentré en suspension.

21. Procédé selon la revendication 20, où le procédé de production d'un concentré en suspension consiste en un traitement par lots.

22. Procédé selon la revendication 21, où le procédé de production d'un concentré en suspension consiste en un traitement par lots comprenant les phases suivantes :
a) chargement de résidus lixiviés de manganèse déshydraté dans un concasseur
b) broyage des résidus lixiviés déshydratés ;
c) hydratation et agitation des résidus lixiviés broyés ;
d) addition d'un agent dispersif au résidu lixivié hydraté ; et
e) laisser reposer le résidu lixivié hydraté.
